(19) Europäisches Patentamt
European Patent Office
Office européen des brevets

(11) Publication number: 0 116 309 A1

# (12) EUROPEAN PATENT APPLICATION

(21) Application number: 84100388.2

(22) Date of filing: 16.01.84

(51) Int. Cl.³: C 08 L 71/02
C 08 G 18/48, C 08 G 18/66
C 08 G 18/14
//(C08L71/02, 71/02)

(30) Priority: 17.01.83 US 458288

(43) Date of publication of application:
22.08.84 Bulletin 84/34

(84) Designated Contracting States:
DE FR GB IT

(71) Applicant: BASF WYANDOTTE CORPORATION
1609 Biddle Avenue
Wyandotte Michigan 48192(US)

(72) Inventor: Reichel, Curtis John
3424 20th Street
Wyandotte Michigan 48192(US)

(72) Inventor: Levis, William Walter, Jr.
2233 17th Street
Wyandotte Michigan 48192(US)

(72) Inventor: Hartmann, Robert John
14676 Yorkshire
Southgate Michigan 48195(US)

(74) Representative: Schweiss, Werner, Dr. et al,
BASF Aktiengesellschaft Patentabteilung
Carl-Bosch-Strasse 38
D-6700 Ludwigshafen(DE)

## (54) Flexible polyurethane foams having high indentation load deflection prepared from polyol blends.

(57) This invention relates to polyol blends which comprise specific polyoxyalkylene triols and specific polyoxyalkylene diols. It also relates to a process for preparing flexible polyurethane foams with the polyol blends, and the resultant foams prepared by the process.

The flexible polyurethane foams are used as furniture cushioning, mattress cores, mattress toppers, carpet underlay, packaging, sponges, toys, athletic padding, and other uses.

EP 0 116 309 A1

Croydon Printing Company Ltd.

# FLEXIBLE POLYURETHANE FOAMS HAVING HIGH INDENTATION LOAD DEFLECTION PREPARED FROM POLYOL BLENDS

This invention relates to certain polyol blends and the flexible polyurethane foams prepared by using the blends. The blends consist of certain polyoxyalkylene diols and certain polyoxyalkylene triols.

It is known that flexible polyurethane foams can be prepared by reacting an organic polyisocyanate with a polyol in the presence of a blowing agent and other optional ingredients such as catalysts, surfactants, fillers, chain extenders, cross-linkers, flame retardants, plasticizers, and other ingredients. A description of such reactions can be found in the treatise by J. H. Saunders and K. C. Frisch, High Polymers, volume XVI, "Polyurethanes," Parts I and II (Interscience Publishers, New York).

Although the basic chemistry for preparing flexible polyurethane foams is generally understood, there is still a need to reduce the costs of producing such foams without sacrificing the mechanical properties of the foam. In general, costs can be reduced by decreasing the density of the foam. However, this usually results in poorer mechanical properties of the foams. The challenge faced by those involved in flexible polyurethane foam research is to

produce low density (1.2 to 2.0 pounds per cubic foot) foams which have excellent mechanical properties such as internal load deflection (ILD).

One approach used in dealing with this challenge has been to use reinforcing agents such as graft polyols or high molecular weight organic fillers. These reinforcing agents assist in improving many of the foam properties, particularly the load-bearing capacity of the foams. The problem with this approach, however, is the expense of the reinforcing agents increases the foam cost. Moreover, foams produced by using graft polyols often are scorched if low density slabstock foams are prepared. Furthermore, if organic fillers are used, they require a higher water formulation which increases the cost of making the foam because more toluene diisocyanate must be used.

Another approach used in dealing with this challenge is to increase the amount of isocyanate used, or to increase the amount of 2,6-isomer in the toluene diisocyanate mixture. Although these techniques will increase the load-bearing capacity of the foams, they cause other problems. Both techniques increase the cost of the foam, particularly the use of more 2,6-isomer since it is not readily available.

Those skilled in the art are aware of the problems associated with producing flexible polyurethane foams

according to the state of the art technology. They are also aware of the need to produce lower density foams with improved mechanical properties, particularly ILD.

This invention relates to polyol blends comprising

(a) from about 11 to about 22 percent by weight, based upon the weight of the blend, of a polyoxyalkylene diol having an average molecular weight of from about 400 to about 1,000; and

(b) from about 78 to about 89 percent by weight, based upon the weight of the blend, of a polyoxyalkylene triol having a molecular weight of from about 4,800 to about 8,000 wherein the triol has an ethylene oxide content of about 14 percent to about 35 percent by weight based upon the weight of the triol.

The polyol blend preferably has a hydroxyl number of from about 45 to 60. The triol preferably has an ethylene oxide content of from about 14 percent to 25 percent by weight based upon the weight of the triol.

This invention also relates to flexible polyurethane foams prepared from the polyol blend by reacting the blend with an organic polyisocyanate in the presence of a blowing agent and other optional ingredients such as

catalysts, fillers, surfactants, chain extenders, cross-linkers, flame retardants.

The polyurethane foams have densities of about 1.0 to about 2.8 pounds per cubic foot and excellent load-bearing capacity along with other acceptable mechanical properties.

The polyoxyalkylene diols and polyoxyalkylene triols which constitute the polyol blends are prepared by methods well known to those skilled in the art. These methods involve the reaction of an initiator with an epoxide in the presence of an oxyalkylation catalyst. The equipment used and the necessary precautions are well known to those skilled in the art.

Initiators which can be used to prepare the polyoxyalkylene diols are compounds having two active hydrogen atoms as determined by the well-known Zerewittinoff test. Examples of such compounds include propylene glycol, ethylene glycol, diethylene glycol, dipropylene glycol, water, 1,10-decanediol, 1,4-butanediol, 1,6-hexanediol, 1,6-hexamethylene glycol, and 2,2-bis(p-hydroxyphenyl)propane.

Epoxides which can be reacted with the diol initiators include 1,3-propane oxide, butylene oxide, styrene oxide, and preferably alkylene oxides such as ethylene oxide and propylene oxide. The epoxides may be

used individually, alternatingly, in sequence, or as mixtures. Most preferred, however, are ethylene oxide, propylene oxide, and mixtures thereof.

As was mentioned previously, the polyoxyalkylene diols have an average molecular weight of about 400 to 1,000. Moreover, propylene oxide adducts of propylene glycol are used on a preferred basis.

Initiators which can be used to prepare the polyoxyalkylene triols are compounds having three active hydrogen atoms as determined by the well-known Zerewittinoff test. Examples of such compounds are glycerin, trimethylol propane, 1,3,6-hexanetriol, 1,2,6-hexanetriol, 1,4,8-octanetriol, and 1,5,10-dodecanetriol. Preferably used as the triol initiator are glycerin and trimethylolpropane.

In order to prepare the polyoxyalkylene triols, the epoxides previously mentioned are reacted with the triol initiators as previously described. However, the polyoxyalkylene triol must have an ethylene oxide content of about 14 percent to about 35 percent by weight based upon the total weight of the polyoxyalkylene triol.

As was previously mentioned, the average molecular weight of the polyoxyalkylene triol is from about 4,800 to about 8,000. The amount of polyoxyalkylene triol in the blend is from 78 to 89 percent by weight based upon the weight of the blend.

It has also been found that blends having relatively low hydroxyl numbers can be used without sacrificing mechanical properties in the polyurethane found. The use of lower hydroxyl numbers reduces costs because less isocyanate can be used. Consequently, it is preferred to use polyol blends having hydroxyl numbers between 50 and 60.

It may also be possible to add small amounts of other polyols to the subject blends without adversely affecting the foam properties.

In order to prepare flexible polyurethane foams, the polyol blends are reacted with an organic polyisocyanate in the presence of a blowing agent. Other ingredients such as catalysts, chain extenders, cross-linkers, surfactants, fillers, plasticizers, and flame retardants may also be used.

Organic polyisocyanates which may be used in the preparation of foams are well known to those skilled in the art and may be represented by the following formula:

$$R''(NCO)_z$$

wherein R" is a polyvalent organic radical which is either aliphatic, aralykyl, alkaryl, aromatic or mixtures thereof, and z is an integer which corresponds to the valence of R" and is at least two. Representative of the organic polyisocyanates contemplated herein includes, for example, aromatic diisocyanates such as 2,4-toluene diisocyanate, 2,6-toluene diisocyanate, mixtures of 2,4- and 2,6-toluene diisocyanate, crude toluene diisocyanate, diphenylmethane diisocyanate, crude diphenylmethane diisocyanate and the like; aromatic triisocyanates such as 4,4',4"-triphenylmethane triisoyanate, 2,4,6-toluene triisocyanates; aromatic tetraisocyanates such as 4,4'-dimethyldiphenylmethane-2,2',5,5'-tetraisocyanate, and the like; arylalkyl polyisocyanates such as xylene diisocyanate; aliphatic polyisocyanates such as hexamethylene-1,6-diisocyanate, lysine diisocyanate methylester and the like, and mixtures thereof. Other organic polyisocyanates include hydrogenated methylene diphenylisocyanate, m-phenylene diisocyanate, naphthalene-1,5-diisocyanate, 1-methoxyphenylene-2,4-diisocyanate, 4,4'-biphenylene diisocyanate, 3,3'-dimethoxy-4,4'-biphenyl diisocyanate, 3,3'-dimethyl-4,4'-biphenyl diisocyanate, and 3,3'-dimthyldiphenylmethane-4,4'-diiocyanate. These polyisocyanates are prepared by conventional methods known in the art such as the phosgenation of the corresponding organic amine. Included within the usable isocyanates are modifications of the above isocyanates which contain carbodiimide, allophanate, urea or isocyanurate structures. Prepolymers and quasi-prepolymers may also be employed as the organic polyisocyanate. The useful prepolymers are isocyanate-terminated reaction products of an organic polyisocyanate and an active hydrogen compound such as a polyol. The quasi-prepolymers are solutions of prepolymers in an excess of organic polyisocyanate and are prepared by reacting an excess of organic polyisocyanate or mixture thereof with a minor amount of an active hydrogen compound, preferably a polyol. Generally, the quasi-prepolymer will have a free isocyanate content of about 20 percent to 40 percent by weight. Active hyrogen compounds are those compounds which have in their structure reactive hyrogens as determined by the Zerewittinoff test, as described by Kohler in the Journal of the American Chemical Society, Vol. 49, page 3181 (1972). These compounds and their method of prparation are well known in the art.

Preferably used as the organic polyisocyanate are isomers of toluene diisocyanate, particularly commercially available mixtures of 2,4- and 2,6-toluene diisocyanate.

The preferred blowing agent which is used in accordance with the process of this invention is water which reacts with isocyanate groups to form carbon dioxide. The amount of water which may be used advantageously is 0.1 part to 8 parts by weight, preferably 1.5 parts to 5 parts by weight relative to 100 parts by weight of polyol blend.

Physically acting blowing agents may also be used as mixtures with water. Suited for this purpose are liquids

which are inert with respect to the organic polyisocyanates and which have boiling points below 100°C, preferably below 50°C and particularly between -50°C and 30°C under atmospheric pressure so that they evaporate under the influence of the exothermal polyaddition reaction. Representative examples include hydrocarbons such as pentane, n- and isobutane and propane, ethers such as dimethylether and diethylether, ketones such as acetone and methylethylketone, and ethylacetate, and preferably halogenated hydrocarbons such as methylene chloride, trichlorofluoromethane, dichlorofluoromethane, dichloromonofluoromethane, dichlorotetrafluoroethane and 1,1,2-trichloro-1,2,2-trifluoroethane, Mixtures of these low boiling liquids with each other and/or other substituted or non-substituted hydrocarbons may also be used.

The amount of physically acting blowing agents used in addition to water depends upon the foam density desired and is approximately 0 to 50 parts by weight, preferably 0 to 20 parts by weight per 100 parts of polyol blend. Under certain conditions, it may be advantageous to mix the organic polyisocyanate with the physically acting blowing agent thereby reducing the viscosity.

Preferably, the reaction takes place in the presence of catalysts. Any of the catalysts employed in the preparation of polyurethane foam can be employed in the

subject invention. Representative of these catalysts include the tertiary amine catalysts such as diethylenetriamine, ketimine, tetramethylenediamine, triethylenediamine, tetramethylenediamine, tetramethylguanidine, trimethylpiperazine and the metalo-organic salt catalysts which are polyvalent metal salts of an organic acid having up to about 18 carbon atoms and being void of active hydrogen atoms. The organo portion of the salt may be either linear or cyclic or saturated or unsaturated. Generally, the polyvalent metal has a valence from about 2 to 4. Typical of these salts include: stannous acetate, stannous butyrate, stannous 2-ethylhexoate, stannous laurate, stannous oleate, stannous octoate, lead cyclopentanecarboxylate, cadmium, cyclohexanecarboxylate, lead naphthanate, lead octoate, cobalt naphthenate, zinc naphthenate, bis(phenylmercury)-dodecyl succinate, phenylmercuric benzoate, cadmium naphthenate, dibutyltin dilaurate and dibutyltin-di-2-ethylhexoate. Generally these catalysts will be employed in amounts ranging from about 0.01 part to 7.5 parts by weight based on the weight of the polyol blend.

Under certain circumstances, it may be advantageous to use chain extenders or cross-linking agents for the preparation of polyurethane foams. Representative examples of such materials include polyfunctional, particularly di- and trifunctional compounds having molecular weights of 62

to 300. The following are specific examples of such compounds: di- and trialkanolamines such as diethanolamine and triethanolamine, aliphatic and aromatic diamines such as ethylenediamine, 1,4-butanediamine, 1,6-hexamethylenediamine, 4,4'-diaminodiphenylmethane, 3,3'-dialkyl-substituted 4,4'-diaminodiphenylmethane, 2,4- and 2,6-toluenediamine, dialkyl-substituted toluenediamines such as 3,5-diethyl-2,4-diaminotoluene and aliphatic diols and triols having 2 to 6 carbon atoms such as ethylene glycol, 1,4-butanediol, 1,6-hexamethylene glycol, glycerin, and trimethylol propane.

If chain extenders or cross-linking agents are used, they are used in quantities of 1 part to 60 parts, preferably 10 to 30 parts by weight per 100 part by weight of polyol blend.

Auxiliaries and additives may also be added to the reaction mixture. Examples include stabilizers, hydrolysis protection agents, pore regulators, fungistatically or bacteriostatically deterring substances, colors, pigments, fillers, surface-active materials, plasticizers and flame retardants.

Examples of surface-active substances include those which serve to support the homogenization of the raw materials and which may also be suited to regulate the cell structure of the foams. These include by way of example, polyoxyalkylene derivatives of siloxane or the alkylene

oxide adducts of organic compounds containing reactive hyrogen atoms such as the ethylene oxide adducts of alcohols, glycols and phenols. Generally, the surfactants are employed in amounts ranging from about 0.01 part to 5 parts by weight per 100 parts of polyol blend.

It may also be advantageous to include a plasticizer in the reaction mixture in order to reduce brittleness of the foams. Commonly known plasticizers may be used. It is particularly advantageous to use those materials which contain phosphorus and/or halogen atoms and which, therefore, additionally increase the flame resistance of the polyurethane plastics. These materials include tricresyl phosphate, tris-2-chloroethylphosphate, trischloropropylphosphate, and tris-2,3-dibromopropyl phosphate.

In addition to the already mentioned halogen-substituted phosphates, inorganic flame retardants may also be used to render the polyurethane foams flame resistant. Examples of these incude antimony trioxide, arsenic oxide, ammonium phoshate and calcium sulfate and melamine.

It generally has proven to be advantageous to use 5 to 50 parts by weight, preferably 5 to 25 part by weight, of the referenced flame retardants per 100 parts by weight of polyol blend.

Conventional fillers for use herein include, for example, aluminum silicate, calcium silicate, magnesium

silicate, calium carbonate, barium sulfate, calcium sulfate, glass fibers, carbon black, and silica. The filler, if used, is normally present in an amount ranging from about 5 parts to 50 parts per weight per 100 parts of polyol blend.

A pigment which can be used herein can be any conventional pigment heretofor disclosed in the art such as titanium dioxide, zinc oxide, iron oxide, antimony oxide, chrome green, chrome yellow, iron blue siennas, molybdate oranges, and organic pigments such as para reds, benzidine yellow, toluidine red, toners, and phthalocyanines.

In order to prepare polyurethane foams according to the process of this invention, the ingredients are reacted at temperatures between 0°C and 70°C, preferably 15°C to 50°C, in such quantities that 0.5 to 2, preferably 0.8 to 1.3, and particularly approximately one reactive hydrogen atom in the reactants is present per isocyanate group.

The polyurethane foams may be produced according to the prepolymer or preferably according to the one-shot process. If the prepolymer process is used, it is advantageous to react small quantities of polyol and the organic polyisocyanate in a prior reaction stage to form a urea and possibly urethane group containing polyisocyanate. According to the one-shot process, the starting components, auxiliaries and additives are introduced individually via

several feed nozzles when one mixing chamber is used and are intensively mixed in the mixing chamber. However, it has proven to be particularly advantageous to work according to the two-component process and to combine the polyols, catalysts, blowing agents and optionally the chain extenders or cross-linking agents, auxiliaries and additives in the so-called A component and to use the organic polyisocyanates, optionally as a mixture with physical blowing agents, auxiliaries and additives as the B component. This method is now predominantly used. An advantage of this process is the fact that the A and B components can be transported in a space-saving manner, can be stored for a limited amount of time, and only require intensive mixing prior to the manufacture of the polyurethane foams.

The polyurethane foams produced in accordance with the method of this invention have densities of 1.0 to 2.8 pounds per cubic foot, preferably 1.2 to 2.2 pounds per cubic foot and are characterized by their increased tensile strength, breaking elongation, Block tear strength and improved compression strength.

The examples which follow, along with this general description, are designed to enable those skilled in the art to practice the invention. They are not intended to limit the scope of the application of the invention. The parts referred to in the examples are by weight and the temperatures are in degrees centigrade unless otherwise stated.

The following abbreviations are used in the examples:

| | |
|---|---|
| DABCO 33LV | - triethylenediamine. |
| EO | - ethylene oxide. |
| PO | - propylene oxide. |
| L-520 | - a surfactant sold by Union Carbide |
| T-9 | - dibutyltin dilaurate, a catalyst. |
| TDI | - a mixture of 2,4- and 2,6-toluene diisocyanate wherein the 2,4-isomer is approximately 80 percent by weight of the mixture. |
| GLY | - a propylene oxide adduct of glycerin containing 2.9 percent by weight of KOH as catalyst. |

Example 1

Example 1 illustrates the preparation of a polyol blend. A polyoxyalkylene triol (polyol 1) was prepared by charging 625 parts of a GLY to a stainless steel autoclave. The autoclave was purged, pressure tested, and then heated to 105°C. After evacuating the vessel to 60 mm mercury, the reactor was sealed and a mixture of 1080 parts of ethylene oxide and 4368 parts of propylene oxide were added to the reactor over 10 hours. After a four-hour reaction period at 105°C, the reactor was cooled to 30°C and discharged. Catalyst removal involved treatment with 3 percent MAGNESOL® absorbent for one hour at 90°C to 100°C followed by filtering and stripping of the filtrate. The resulting polyoxyalkylene triol had an average molecular weight of 5700 and an ethylene oxide content of 18 percent by weight. It had a hydroxyl number of 29.3.

A polyoxyalkylene diol (polyol 2) was prepared by charging 767 parts of propylene glycol and 27.6 parts of 87 percent potassium hydroxide to a stainless steel autoclave. The autoclave was purged, pressure tested, and sealed. After heating to 105°C and stirring for one-half hour, 5282 parts of propylene oxide were added over 9 hours. After a four-hour reaction period, the reactor was cooled to 30°C and discharged. Catalyst removal was accomplished as set forth previously. The resulting

polyoxyalkylene diol had an average molecular weight of 560 and a hydroxyl number of 199.

A blend of the polyoxyalkylene triol and polyoxyalkylene diol was prepared by mixing 85 parts of the polyoxyalkylene triol with 15 parts of the polyoxyalkylene diol. The hydroxyl number of the blend was 54.8.

Example 2

Example 2 illustrates the preparation of a polyurethane foam using the blend from Example 1. The polyol blend, distilled water, surfactant, and DABCO 33LV were mixed for thirty seconds using a Penncraft 4123 Drill Press equipped with a multi-bladed stirrer. The tin catalyst (T-9) was added and mixed for 15 seconds. The 80/20 TDI isomer mixture was added with stirring, mixed for five seconds and poured into a one-gallon cake box where the foam was allowed to rise. After the foam had risen, it was cured in an oven for 10 minutes at 110°C. The foam formulation and foam properties are shown in Table I which follows.

TABLE I

| Formulation | Parts |
|---|---|
| 80/20 TDI | 156.0 |
| Polyol Blend | 300.0 |
| Water | 12.0 |
| Surfactant | 3.0 |
| DABCO 33 LV | 1.0 |
| T-9 | 0.28 |
| **Properties** | |
| Density, pcf | 1.72 |
| Tensile Strength, psi | 19.0 |
| Elongation, % | 177 |
| Tear, pi | 3.1 |
| ILD (lb/50 sq. in.) | |
| 25% defl. | 44.0 |
| 65% defl. | 98.0 |
| 25% return | 27.6 |
| Sag Factor | 2.23 |
| Guide Factor | 25.6 |
| % Recovery | 62.7 |
| CLD (psi) | |
| 50% defl. | .66 |
| Compression Sets, % Set | |
| 50% Comp. | 10.9 |
| 90% Comp. | 12.3 |
| Air flow, cfm at .5" $H_2O$ | 6.0 |

In Examples 3-5 and Comparison Examples A and B, the procedure set forth in Example 2 was followed except other polyoxyalkylene triols were used. The polyoxyalkylene triols used in these Examples are described as follows.

Polyol 3 - a block polyoxyalkylene triol having an average molecular weight of 5700 and a hydroxyl number of 30.0. This polyol was prepared by sequentially reacting PO,

EO, and PO with GLY such that the EO content was 18 percent by weight based upon the weight of the polyoxyalkylene triol. A blend was prepared as in Example 1 and had a hydroxyl number of 55.4.

Polyol 4 - a heteric polyoxyalkylene triol having an average molecular weight of about 5700 and a hydroxyl number of 30.1. This polyol was prepared by reacting a mixture of EO and PO with GLY and then capping with PO such that the PO cap is 50 percent by weight and the EO content 18 percent by weight based upon the weight of the polyoxyalkylene triol. A blend was prepared as in Example 1 and had a hydroxyl number of 55.4.

Polyol 5 - a heteric polyoxyalkylene triol having an average molecular weight of about 5700 and a hydroxyl number of 29.6. This polyol was prepared by reacting a mixture of EO and PO with GLY and then capping with PO such that the PO cap is 10 percent by weight and the EO content is 18 percent by weight based upon the weight of the polyoxyalkylene triol. A blend was prepared as in Example 1 and had a hydroxyl number of 55.

Comparative Polyol A

A polyol blend was not used in the comparative example. Instead a polyoxyalkylene triol was used having an average molecular weight of 2,775 and a hydroxyl number of 56. This polyoxyalkylene triol was prepared by reacting a

mixture of EO and PO with glycerin such that the EO content is 5.85 percent by weight based upon the weight of the polyoxyalkylene triol.

Comparative Polyol B

The procedure of Example 2 was followed except the triol had a 10 percent EO content instead of an 18 percent EO content. The results of the foam properties are shown in Table II which follows.

The foams prepared with the described polyol blends and comparative polyols had the following properties which are set forth in Table II. The formulation was the same as that set forth in Table II.

TABLE II

| | Examples | | | Comparison | |
|---|---|---|---|---|---|
| | 3 | 4 | 5 | A | B |
| **Foam Properties** | | | | | |
| Density, pcf | 1.69 | 1.64 | 1.65 | 1.59 | 1.68 |
| Tensile Strength, psi | 16.7 | 17.7 | 19.5 | 13.7 | 13.7 |
| Elongation, % | 180 | 223 | 243 | 117 | 197. |
| Tear, pi | 2.7 | 2.7 | 2.7 | 1.7 | 2.7 |
| ILD (lb/50 sq. in.) | | | | | |
| 25% defl. | 41.8 | 42.2 | 47.6 | 34.0 | 41.9 |
| 65% defl. | 87.2 | 84.4 | 90.4 | 63.1 | 77.0 |
| 25% return | 25.8 | 25.0 | 26.0 | 23.0 | 21.9 |
| Sag Factor | 2.09 | 2.00 | 1.90 | 1.86 | 1.84 |
| Guide Factor | 24.7 | 25.9 | 28.9 | 21.4 | 24.9 |
| % Recovery | 61.7 | 59.2 | 54.6 | 67.6 | 52.3 |
| CLD (psi) | | | | | |
| 50% defl. | .66 | .57 | .65 | .52 | .69 |
| Compression Sets, % Set | | | | | |
| 50% Comp. | 12.7 | 11.4 | 11.6 | 4.1 | 32.4 |
| 90% Comp. | 13.5 | 11.4 | 22.7 | 5.2 | 92.9 |
| Air flow, cfm at .5" $H_2O$ | 6.3 | 6.5 | 5.8 | 6.5 | 1.90 |

Table II shows that the foam properties are significantly improved when polyol blends of this invention are employed as compared to blends having reduced EO content (Comparative Example B) and to unblended polyols (Comparative Example A).

Example 6-9

Examples 6-9 illustrate the effect of using a different polyoxyalkylene diol. The formulation for these examples was the same as that set forth in Table I. In these examples, the polyoxyalkylene diol used was a

propylene oxide adduct of propylene glycol having an average molecular weight of 400 and a hydroxyl number of 260. The triols used are identified in Table III, which follows, along with the amounts of triol and diol used. The hydroxyl number of the blend in all cases was 56. Table III also shows the foam properties.

TABLE III

| Example | 6 | 7 | 8 | 9 |
|---|---|---|---|---|
| **Blend** | | | | |
| Triol Used | Polyol 3 | Polyol 1 | Polyol 4 | Polyol 5 |
| % Triol | 85 | 85 | 85 | 85 |
| % Diol | 15 | 15 | 15 | 15 |
| **Foam Properties** | | | | |
| Density, pcf | 1.61 | 1.65 | 1.55 | 1.66 |
| Tensile Strength, psi | 19.2 | 20.8 | 18.5 | 23.4 |
| Elongation, % | 133 | 150 | 140 | 137 |
| Tear, pi | 2.7 | 3.1 | 3.0 | 3.1 |
| ILD (lb/50 sq. in.) | | | | |
| 25% defl. | 38.0 | 38.9 | 36.6 | 43.6 |
| 65% defl. | 76.8 | 77.0 | 72.5 | 98.2 |
| 25% return | 22.2 | 22.2 | 22.0 | 26.2 |
| Sag Factor | 2.02 | 1.98 | 1.98 | 2.25 |
| Guide Factor | 23.6 | 23.5 | 23.5 | 26.2 |
| % Recovery | 58.4 | 57.1 | 60.1 | 60.1 |
| CLD (psi) | | | | |
| 50% defl. | .57 | .64 | .54 | .66 |
| Compression Sets, % Set | | | | |
| 50% Comp. | 15.1 | 16.8 | 12.3 | 14.5 |
| 90% Comp. | 12.9 | 17.4 | 11.3 | 15.5 |
| Air flow, cfm at .5" $H_2O$ | 5.2 | 5.5 | 5.0 | 5.7 |

Claims

1. A polyol blend comprising

a. from about 11 to about 22 percent by weight, based upon the total weight of the blend, of a polyoxyalkylene diol having an average molecular weight of from about 400 to about 1,000; and

b. from about 78 to about 89 percent by weight, based upon the weight of the polyol blend, of a polyoxyalkylene triol having a molecular weight of from about 4,800 to about 8,000 wherein the triol has an ethylene oxide content of about 14 percent to about 35 percent by weight based upon the weight of the triol.

2. The polyol blend of claim 1 wherein the triol as an ethylene oxide content of from about 14 percent by eight to about 25 percent by weight based upon the weight f the triol.

3. The polyol blend of claim 1 wherein the ydroxyl number of the blend is from about 45 to 65.

4. The polyol blend of claim 1 wherein the polyoxyalkylene diol is based upon an initiator selected from the group consisting of propylene glycol, ethylene glycol, and 2,2-bis(p-hydroxyphenol)propane and the polyoxyalkylene triol is based upon an initiator selected from the group consisting of glycerin and trimethylolpropane.

5. A process for preparing a flexible polyurethane foam which comprises reacting in the presence of a blowing agent

a. an organic polyisocyanate, and

b. a polyol blend comprising

(1) from about 11 to about 22 percent by weight, based upon the total weight of the blend, of a polyoxyalkylene diol having an average molecular weight of from about 400 to about 1,000; and

(2) from about 78 to about 89 percent by weight, based upon the weight of the polyol blend, of a polyoxyalkylene triol having a molecular weight of from about 4,800 to about 8,000 wherein the ethylene oxide content of the triol is about 14 percent to about 35 percent by

weight based upon the weight of the triol.

6. The process of claim 5 wherein the ethylene oxide content of the triol is from about 15 percent by weight to about 25 percent by weight based upon the weight of the triol.

7. The process of claim 5 carried out in the presence of a catalyst.

8. The process of claim 6 carried out by a one-shot method.

9. The process of claim 7 wherein the polyol blend has a hydroxyl number of from about 45 to 65.

10. The process of claim 8 wherein the polyoxyalkylene diol is based upon an initiator selected from the group consisting of propylene glycol, ethylene glycol, and 2,2-bis(p-hydroxyphenol)propane and the polyoxyalkylene triol is based upon an initiator selected from the group consisting of glycerin and trimethylolpropane.

11. The process of claim 10 wherein the organic polyisocyanate is a mixture of toluene diisocyanate isomers.

12. A flexible polyurethane foam which comprises the reaction product of

a. an organic polyisocyanate

b. a polyol blend comprising

(1) from about 11 to about 22 percent by weight, based upon the total weight of the blend, of a polyoxyalkylene diol having an average molecular weight of from about 400 to about 1,000; and

(2) from about 78 to about 89 percent by weight, based upon the weight of the polyol blend, of a polyoxyalkylene triol having a molecular weight of from about 4,800 to about 8,000, and

wherein said triol has an ethylene oxide content of about 14 percent to about 35 percent by weight based upon the weight of the triol.

c. a blowing agent.

13. The polyurethane foam of claim 12 wherein the ethylene content of the triol is from about 14 percent by weight to 25 percent by weight based upon the weight of the triol.

14. The flexible foam of claim 12 wherein the hydroxyl number of the polyol blend is from about 45 to 65.

15. The flexible foam of claim 13 wherein the polyoxyalkylene diol is based upon an initiator selected from the group consisting of propylene glycol, ethylene glycol, and 2,2-bis(p-hydroxyphenol)propane and the polyoxyalkylene triol is based upon an initiator selected from the group consisting of glycerin and trimethylolpropane.

16. The flexible foam of claim 15 wherein the foam has a density of 1.0 to 2.8 pounds per cubic foot.

17. The flexible foam of claim 16 herein the organic polyisocyanate is a mixture of toluene diisocyanate isomers.

European Patent Office

# EUROPEAN SEARCH REPORT

0116309

Application number

EP 84 10 0388

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | US-A-3 865 762 (G. REPIQUET et al.)<br>* Column 8, claim 1; column 10, claim 15; column 2, lines 45-65; columns 4,5, examples 1-4, columns 5,6, table 1 *<br>--- | 1,5,12,16 | C 08 L 71/02<br>C 08 G 18/48<br>C 08 G 18/66<br>C 08 G 18/14 //<br>(C 08 L 71/02<br>C 08 L 71/02 ) |
| A | FR-A-1 464 738 (ALLIED CHEM.)<br>----- | | |
| | | | **TECHNICAL FIELDS SEARCHED (Int. Cl. 3)** |
| | | | C 08 G<br>C 08 L |

The present search report has been drawn up for all claims

| Place of search | Date of completion of the search | Examiner |
|---|---|---|
| THE HAGUE | 09-05-1984 | VAN PUYMBROECK M.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document